# EUROPÄISCHE PATENTSCHRIFT

(11) **EP 1 938 397 B1**
(45) Veröffentlichungstag und Bekanntmachung des Hinweises auf die Patenterteilung: **22.04.2009**
(21) Anmeldenummer: 06793332.5
(22) Anmeldetag: 07.09.2006
(51) Int. Cl.: H01L 41/09

(54) **ULTRASCHALLLINEARMOTOR**
ULTRASONIC LINEAR MOTOR
MOTEUR LINEAIRE A ULTRASONS

(30) Priorität: 21.10.2005 DE 102005050627; 07.11.2005 DE 102005053018
(43) Veröffentlichungstag der Anmeldung: 02.07.2008
(73) Patentinhaber: Physik Instrumente (PI) GmbH & Co. KG, 76228 Karlsruhe (DE)
(72) Erfinder: WISCHNEWSKIJ, Alexej, 76744 Wörth (DE); WISCHNEWSKIJ, Wladimir, 76337 Waldbronn (DE)
(74) Vertreter: Kruspig, Volkmar
(86) Internationale Anmeldenummer: PCT/EP2006/066138
(87) Internationale Veröffentlichungsnummer: WO 2007/045525

(56) Entgegenhaltungen:
- EP-A1- 0 601 671
- EP-A1- 0 725 476
- EP-A2- 1 267 425
- WO-A-20/06027031
- WO-A-20/06050759
- US-A- 5 036 245
- US-A- 5 170 088

## Beschreibung

Die Erfindung betrifft einen Ultraschalllinearmotor und kann in preiswerten optischen Präzisionssystemen oder ähnlichen Geräten eingesetzt werden.

Bekannt sind Ultraschalllinearmotoren mit als Plättchen ausgeführten Ultraschalloszillatoren, auf denen das Friktionselement befestigt ist (siehe z.B. EP 1 267 425 A). Dabei ist eine Anpressvorrichtung so ausgeführt, dass die am Friktionselement anliegende Kraft vollständig auf das lineare Kugellager des beweglichen Elementes übertragen wird. Dadurch steigen die Reibungsverluste und es ist nicht möglich, preiswerte Gleitlager in solchen Motoren einzusetzen.

Bekannt sind auch Ultraschalllinearmotoren, in denen das bewegliche Element den Ultraschalloszillator einschließt (siehe z.B. EP 0 601 671 A1). In diesen Motoren bildet der Ultraschallmotor eine Führungsschiene für das bewegliche Element. Für diese Motoren sind keine Linearkugellager erforderlich.

Nachteilig bei diesen Motoren ist, dass der Oszillator kompliziert in der kon□struktiven Ausführung und deswegen teuer in der Herstellung ist. Die Motoren können in preiswerten optischen Systemen eingesetzt werden. Jedoch sind sie ungenau in der Positionierung des beweglichen Elementes, und es ist nicht möglich, sie beliebig zu verkleinern.

Aufgabe der Erfindung ist die Bereitstellung eines verbesserten Ultraschalllinearmotors mit einer vereinfachten Konstruktion, die zudem eine Erhöhung der Genauigkeit der Positionierung des beweglichen Elementes, eine einfachere Herstellungs- und Montagetechnologie des Motors, eine Verringerung der Kosten und kleinere Abmessungen ermöglicht.
Diese Aufgabe wird durch einen Ultraschalllinearmotor mit den Merkmalen des Anspruchs 1 gelöst. Zweckmäßige Fortbildungen des Erfindungsgedankens sind Gegenstand der abhängigen Ansprüche.

Die Erfindung schließt den wesentlichen Gedanken ein, einen als solchen bekannten plattenförmigen Ultraschalloszillator in einer Anordnung mit einem beweglichen Element, welches zwei Friktionsteile aufweist und in Eingriff mit einer Führungsschiene steht, in eine geeignete Kraft-Konstellation bezüglich dieser Führungsmittel zu bringen. Hierbei ist es durch Wahl der Plattenform und der Konstruktion des beweglichen Elementes möglich, einen Teil der Anpresskraft der Friktionselemente an die Oberflächen des ausgeführten Oszillators auch zum Anpressen des beweglichen Elementes des Motors an seine Führung einzusetzen.

Die Erfindung schließt weiter den Gedanken ein, eine federnde Verbindung zwischen den genannten Friktionsteilen vorzusehen, die eine geeignete Anpresskraft des beweglichen Elementes an die Seitenflächen des Ultraschalloszillators bereitstellt. Des weiteren wird hierdurch eine geeignete Anpresskraft zwischen dem beweglichen Element und der erwähnten Führungsschiene bereitstellt. Schließlich gehört zur Erfindung der Gedanke, die erwähnten Anpresskräfte durch eine geneigte Ausführung der Seitenflächen des Ultraschalloszillators in eine vorbestimmte Relation zueinander zu bringen.

Die Erfindung ermöglicht es, die Konstruktion des Miniaturultraschalllinearmotors wesentlich zu vereinfachen und auf die Verwendung von Präzisionswälzlagern zu verzichten. Dadurch wird die Justiergenauigkeit des beweglichen Elementes erhöht, da seine Bewegung relativ zur Oberfläche der präzise geschliffenen Führungsschiene erfolgt. Die Reibungsverluste im Gleitlager werden verringert, die Montagetechnologie wird vereinfacht, die Herstellungskosten werden gesenkt, die Abmessungen werden verringert. Dadurch ist es möglich, den Motor in preiswerten optischen Präzisionssystemen einzusetzen.

In einer Ausführung der Erfindung ist vorgesehen, dass Anschlusselektroden des Ultraschalloszillators elastische dünne leitfähige Stäbe aufweisen, deren eines Ende fest mit den entsprechenden Elektroden verbunden ist und deren anderes Ende, bezogen auf die Führungsschiene, fest fixiert ist. Dies erweitert die konstruktiven Ausführungsmöglichkeiten des erfindungsgemäßen Miniaturmotors.

In einer weiteren Ausführungsform ist vorgesehen, dass die Führungsschiene klammerartig ausgeführt und fest mit einer gemeinsamen Elektrode des Ultraschalloszillators verbunden ist. Dies vereinfacht die Konstruktion des Miniaturmotors.

Die Hauptflächen des Ultraschalloszillators sind in einer zweckmäßigen Ausführung rechteckig ausgebildet, und in einer weiteren Ausführung gilt dies auch für die Seitenflächen.

Die federnde bzw. elastische Verbindung der Friktionsteile des beweglichen Elementes miteinander wird in einer zweckmäßigen Ausführung durch eine Druckfeder realisiert, welche die Friktionsteile gegeneinander elastisch vorspannt. Auch diese Druckfeder ist in einer Ausgestaltung dieser Ausführung klammerartig ausgeführt, wobei die Friktionsteile an den freien Enden der Schenkel der Klammer platziert sind.

Vorteile und Zweckmäßigkeiten der Erfindung ergeben sich im Übrigen aus der nachfolgenden Beschreibung eines bevorzugten Ausführungsbeispiels sowie von Modifikationen desselben und von bevorzugten Aspekten der Erfindung anhand der Figuren. Von diesen zeigen:

Fig. 1 die Konstruktion des vorgeschlagenen Motors in einer Ausführungsform,
Fig. 2 den Ultraschalloszillator des Motors nach Fig. 1,
Fig. 3 eine schematische Darstellung im Motor auftretender Kräfte,
Fig. 4 einen Motor mit stabförmigen Anschlusselektroden,
Fig. 5 einen Motor mit einer klammerförmigen Führungsschiene und
Fig. 6 einen Fokussierblock.

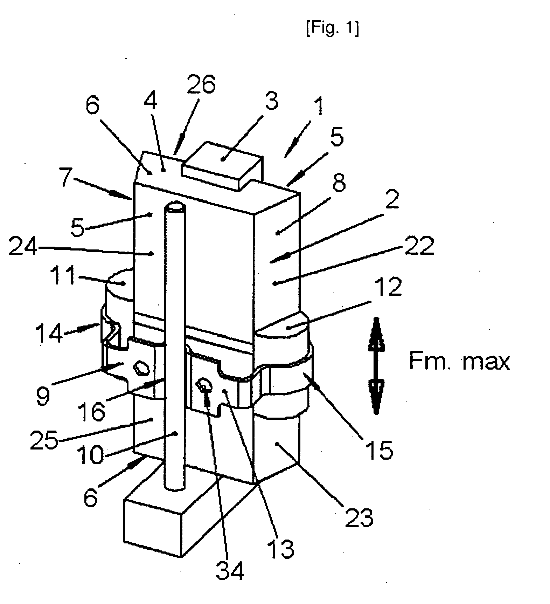

Ein vorgeschlagener Ultraschallmotor 1 nach Fig. 1 besteht weist einen Ultraschalloszillator 2 auf, der in einem Halter 3 angeordnet ist. Der Oszillator 2 ist als Platte 4 ausgeführt, die parallele rechtwinklige Seitenflächen (Hauptflächen) 5, Stirnflächen 6 und Seitenflächen 7 und 8 aufweist.

Der Motor 1 umfasst ein bewegliches Element 9, das sich in Koinzidenz mit mindestens einer Führungsschiene 10 befindet. Das bewegliche Element 9 besteht aus zwei Friktionsteilen 11 und 12, die untereinander über eine Druckfeder 13 verbunden sind, wobei jedes der Friktionsteile an die entsprechende Seitenfläche 7 und 8 der Platte 4 angepresst wird.

Die Druckfeder 13 hat für den Halt der Friktionsteile 11 und 12 besondere Fixierstellen 14 und 15. Außerdem kann sie eine Laufnut 16 aufweisen, auf der das bewegliche Element 9 der Führungsschiene 10 gleitet.

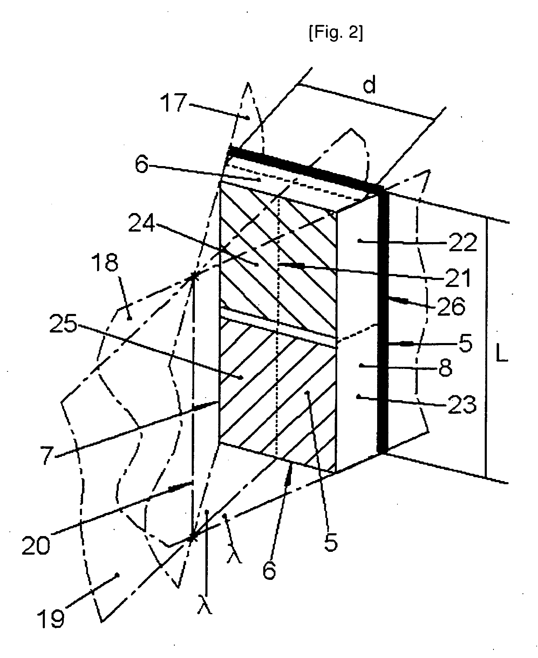

Im vorgeschlagenen Motor sind die Seitenflächen 7 und 8 der Platte 4 als unter dem Winkel λ zu einer Längssymmetriefläche 19 der Platte 4 - wie in Fig. 2 - geneigte Flächen 17 und 18 ausgeführt. Dabei verläuft eine Schnittlinie 20 der Flächen 17 und 18 der Platte 4 mit der Symmetriefläche 19 parallel zu den Hauptkanten 5. L ist die Länge der Platte 4 und d die Länge der mittleren Linie der Stirnfläche. Das Verhältnis von L /d wird so gewählt, dass es etwa 2,34 beträgt.

Unter der Längssymmetrieebene 19 wird die Ebene verstanden, die senkrecht zu den Hauptflächen 5 und durch eine Längssymmetrielinie 21 der Fläche 5 verläuft. Die Linie 21 stellt die Symmetrielinie der Fläche 5, die parallel zur Länge der Platte 4 verläuft (Fig. 2.), dar.

Der Ultraschalloszillator 2 des vorgeschlagenen Motors besitzt zwei Generatoren 22 und 23 für asymmetrische akustische Stehwellen.

Die Platte 4 des Oszillators 2 kann vollständig aus piezoelektrischer Keramik hergestellt werden. In dem Fall kann sie zwei Erregerelektroden 24 und 25 und eine gemeinsame Elektrode 26 aufweisen. Dabei wird jeder der Generatoren 22 und 23 mit der entsprechenden Elektrode 24 oder 25 gebildet, aus einem Teil der Elektrode 26 und der Piezokeramik zwischen den Elektroden 24 und 25 und einem Teil der Elektrode 26 gebildet. Damit eine elektrische Erregerspannung angelegt werden kann, muss jede der Elektroden 24, 25 und 26 einen elastischen Anschluss aufweisen, über den die Elektrode mit der elektrischen Erregerquelle des Oszillators verbunden ist (in den Figuren nicht angegeben).

In einer anderen Ausführung des Oszillators 2 kann die Platte 4 als Mehrschichtteil mit 2 Mehrschichtgeneratoren für akustische Wellen ausgeführt werden.

Die Platte 4 kann auch ein zusammengesetztes Teil darstellen, das aus einem passiven Resonator und einen mit ihm verbundenen piezoelektrischen Erregerelementen besteht (letztere in den Figuren nicht angegeben).

Auf die Seitenflächen 7 und 8 können dünne abriebbeständige Schichten aus abriebfestem Material aufgebracht werden.

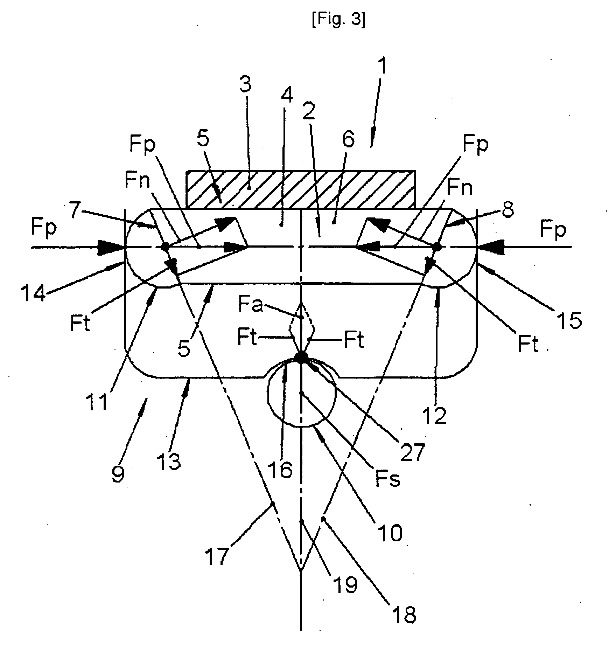

Fig. 3 zeigt eine schematische Motoransicht von oben. Sie verdeutlicht die im Motor 1 an der Druckfeder 13 anliegenden Kräfte. Die Kraft Fₚ stellt die Federkraft der Feder 13 dar, die aus Richtung der Fixierstellen 14, 15 und der Feder 13 auf die Friktionsteile 11 und 12 einwirken. Diese Kräfte werden auf die Seitenflächen 7, 8 der Platte 4 übertragen. Jede der Kräfte Fₚ kann in die Kraftkomponente Fₙ, die senkrecht zur Fläche 7 oder 8, d.h. senkrecht zur Oberfläche 17 oder 18, wirkt und in die Kraftkomponente Fₜ, die längs der Fläche 7 oder 8, d.h. längs der Flächen 17 oder 18 wirkt, zerlegt werden.

Da die Kraft F, längs zur Führungsschiene 10 wirkt, wird sie mittels der Feder 13 auf den Berührungspunkt 27 der Laufnut 16 der Feder 13 (bewegliches Element 9) mit der Führungsschiene 10 übertragen, wo sie sich in einem Punkt addieren. Die Kraft Fₐ stellt die resultierende Kraft dar, die sich aus der Überlagerung der zwei Kräfte Fₜ auf die Symmetrieebene 19 bildet. Diese Kraft wirkt auf die Feder 13 ein, und zwar von der Seite des beweglichen Elementes 9 in Richtung der Führungsschiene 10. Dabei entsteht in der Schiene 10 die Gegenkraft Fₛ.

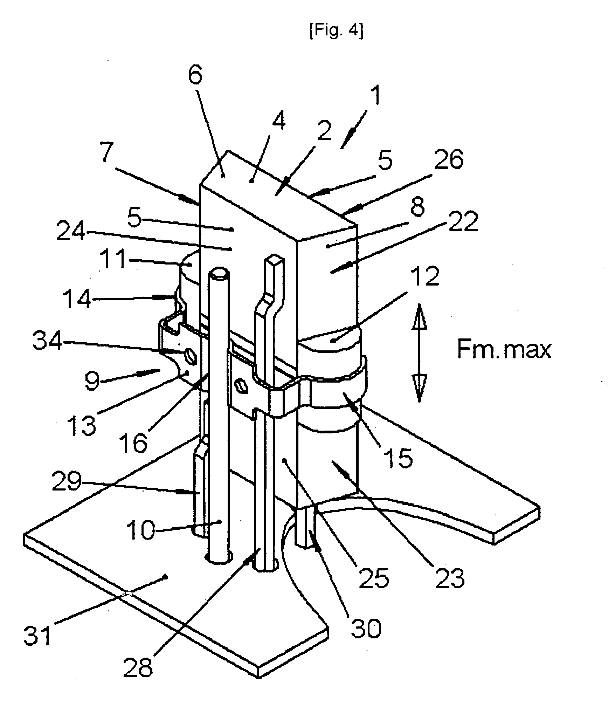

Fig. 4 zeigt die konstruktive Ausführung des vorgeschlagenen Motors bei dem die Anschlusselektroden 24, 25, 26 als elastische Stäbe 28, 29, 30 ausgeführt sind. Die einen Enden der Anschlüsse sind dabei fest mit der Oberfläche der entsprechenden Elektroden verbunden. Die anderen Enden werden auf die Führungsschienen 10 bezogen fixiert. Dazu können sie auf der sie fixierenden Platte 31 befestigt werden, auf der sich auch die Führungsschiene 10 befindet. Die Platte 31 kann zugleich als Verbindungsplatte bzw. als Leiterplatte dienen.

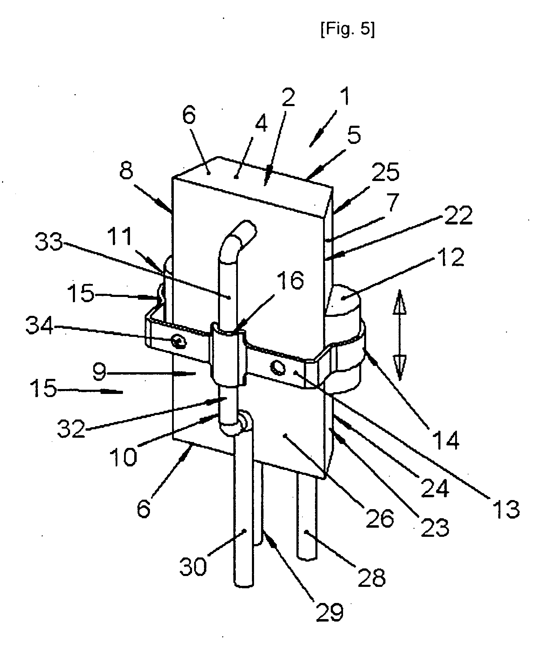

Im vorgeschlagenen Motor kann die Führungsschiene 10 als Klammer 32 mit einem Führungsteil 33 ausgeführt werden. Die Klammer 32 ist fest mit der gemeinsamen Elektrode 26 verbunden und kann auch Teil des festen Anschlusses 30 der gemeinsamen Elektrode 6 (Fig. 5) sein. Die festen Anschlüsse 28, 29, 30 können aus dünnen Stahldraht oder Berylliumbronze mit rechteckigem oder rundem Querschnitt gefertigt werden. Sie werden angelötet oder mit leitfähigem Kleber auf der Oberfläche der entsprechenden Elektroden des Oszillators 2 befestigt.

In jeder der vorgeschlagenen Motorvarianten ist auf dem beweglichen Element 9 das in Bewegung zu versetzende Teil des optischen Systems - z.B. die optische Linse, das Objektiv oder das optische Filter (diese Elemente werden in den Fig. 1, 2, 3, 4 nicht gezeigt) - befestigt. Dafür kann die Feder 13 Öffnungen 34 (Fig. 1, 4, 5) aufweisen. Das sich bewegende Teil kann auch auf jede andere Art und Weise befestigt werden.

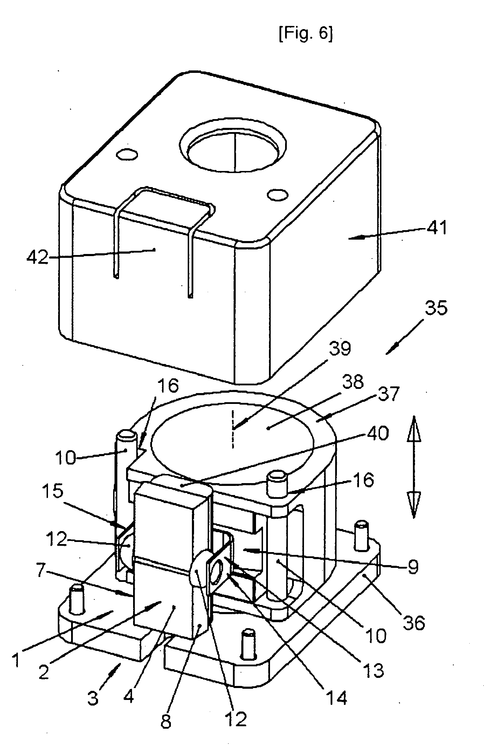

Fig. 6 zeigt einen Fokussierblock 35 der Miniaturkamera. Der Block 35 besteht aus dem Gehäuse 3 mit einer Grundplatte 36, einem Halter 37 für eine Linsengruppe 38 mit der optischen Achse 39, einer Stütze 40 für den Oszillator 2, einem Deckel 41 und einer Fixierfeder 42.

Mittels der Kräfte Fₚ presst die Druckfeder 13 mit ihren Fixierstellen 14 und 15 die Friktionsteile 11 und 12 an die Seitenflächen 7 und 8 der Platte 4 des Oszillators 2 (Fig. 1). Die Kräfte Fₚ werden durch die Elastizität der Feder 13 bestimmt und durch die erforderliche Zugbeanspruchung Fₘ des Miniaturmotors vorgegeben.

Da die Ebenen 17 und 18 der Seitenflächen 7 und 8 unter dem Winkel λ (Fig. 2) zur Längssymmetrieebene geneigt sind, teilen sich die Kräfte Fₚ auf den Flächen 7 und 8 (Fig. 3) jeweils in eine Kraft Fₙ, die die Friktionsteile an die Flächen 7 und 8 anpressen und in eine Kraft Fₜ auf, die längs der Flächen 7 und 8 (längs der Ebenen 17 und 18) wirkt.

Fₙ = F_{p*} cosλ Fₜ = F_{p*} sinλ

Das Verhältnis der Kräfte ist:

Fₜ/Fₙ=T_{g*}λ

Die Kraft Fₙ wird durch die erforderliche Anpresskraft der Friktionsteile 11 und 12 an die Flächen 7 und 8 bestimmt und wird ausgehend von der maximalen Zugkraft Fₘ max des Motors und des Reibungskoeffizienten des Friktionspaares K_{f} wie folgt berechnet:

Fₙ = Fₘmax/ K_{f}

Die Kraft Fₚ wird nach folgender Formel bestimmt:

Fₚ = Fₘmax/ K_{f*}cosλ

Die Kraft Fₜ wird durch die Feder 13 auf die Führungsschiene 10 übertragen und greift am Punkt 17 (Fig. 3) an. Jedes Mal wirkt die Kraft unter dem Winkel λ zur Symmetrieebene 19. Die resultierende Kraft Fₐ - Ergebnis der beiden angreifenden Kräfte Fₜ ; die das bewegliche Element 9 an die Führungsschienen 10 anpressen - ist:

Fₐ = 2 Fₜ cos λ = 2 F_{p*} sin λ_{*}cos λ

Durch Anlegen einer Erregerspannung an die Elektroden 24 oder 25 - bezogen auf die gemeinsame Elektrode 26 - wird der Generator für akustische Schwingungen 22 oder 23 angesteuert. Dadurch bildet sich im Oszillator 2 des Motors eine asymmetrische akustische Stehwelle aus, was eine Bewegung des beweglichen Elementes 9 in Richtung des angeregten Generators zur Folge hat, und zwar so, wie es in den Fig. 1, 4, 5, 6 mit Pfeilen angegeben ist. Das Umschalten der Enegerspannung von einem (z.B. Nr. 22) zum anderen Generator (z.B. Nr. 23) bewirkt die Umkehr der Bewegungsrichtung des Elementes 9.

Im angeregten Oszillator 2 entsteht die maximale Zugkraft Fₘmax, die durch die die Friktionselemente 11 und 12 an die Seitenflächen 7 und 8 der Platte 4 anpressende Kraft Fₙ bestimmt wird. Diese Kräfte werden durch die durch die Feder 13 unter dem Winkel λ wirkende Kraft Fₚ bestimmt.

Ein wesentliches Merkmal dieser Motorkonstruktion besteht darin, dass zum Anpressen des beweglichen Elementes 9 an die Führungsschiene 10 nur ein Teil der durch die Druckfeder 13 erzeugten Kraft Fₚ (Komponente Fₜ) verwendet wird. Dieser Teil der Kraft kann durch Änderung des Winkels λ soweit verändert werden, dass nur die minimal zum Anpressen des Elementes 9 an die Führungsschiene 10 erforderliche Kraft Fₐ anliegt. Dies ermöglicht es, Reibungsverluste zwischen dem beweglichen Element 9 und der Führungsschiene 10 auf ein Minimum zu verringern.

Die Kraft Fₜ bewirkt, dass der Motor zwischen der Führungsschiene 10 und dem Halter 3 (Fig. 1) zusammengepresst wird. Dadurch verschwindet der Spalt zwischen Element 9 und der Führungsschiene 10, wodurch eine robuste, gegen äußere Einflüsse stabile Konstruktion sich ausbildet.

Das bewegliche Element 9 bewegt sich relativ zum Profil der Oberfläche der als präzise geschliffener Stab hergestellten Führungsschiene 10, auf der die Laufnut 16 (Fig. 1) gleitet.

In der in Fig. 4 gezeigten Motorvariante sind die festen Anschlüsse 28, 29, 30 und die Führungsschiene 10 auf der Platte 31 befestigt. Dies erweitert die konstruktiven Möglichkeiten des vorgeschlagenen Miniaturmotors. Dadurch kann ein solcher Motor als elektronisches Bauteil auf einer Leiterplatte montiert werden.

In der in Fig. 5 gezeigten Motorvariante gleitet die Laufnut des beweglichen Elementes 9 im Führungsteil 33 der Klammer 32, die auf der Oberfläche des Oszillators 2 befestigt ist. Das vereinfacht wesentlich den Motor und verringert die Reibungsverluste im Friktionskontakt.

Fig. 6 zeigt ein Beispiel für die Anwendung des vorgeschlagenen Motors in einem Fokussierblock 35 eines Miniaturfotoapparates.

In dieser Anwendung wird der Oszillator 2 durch die Kraftkomponenten der Druckfeder 13 an die Stütze 40 angepresst und in vertikaler Richtung durch die Feder 42 fixiert. Der Block besteht aus zwei Führungsschienen 10, an die, die auf dem Halter 37 der Linsengruppe 38 angeordneten Laufnute 16 angepresst werden. Die Konstruktion des Fokussierblockes 35 ermöglicht eine Verschiebung der Linsengruppe 38 parallel zur ihrer optischen Achse 39 mit einer Genauigkeit, die durch die Justiergenauigkeit der Führungsschienen 10 bestimmt wird.

Bezugszeichen

Motor
2 Ultraschaloszillator
3 Halter
4 Oszillatorplatte 2
5 Hauptflächen der Platte 4
6 Stirnflächen der Platte 4
7, 8 Seitenflächen der Platte 4
9 Bewegliches Element
10 Führungsschiene
11,12 Friktionsteile des beweglichen Elementes 9
13 Druckfeder
14, 15 Fixierstellen zum Halten der Friktionsteile 11, 12
16 Laufnut
17, 18 Oberfläche der Seitenflächen 7, 8
19 Längssymmetrieebene der Platte 4
20 Schnittlinie der Ebenen 17, 18, 19
21 Längssymmetrieebene der Fläche 5
22, 23 Asymmetrische Stehwellengeneratoren
24, 25 Erregelektroden
26 Gemeinsame Elektrode
27 Berührungspunkt zwischen beweglichem Element 9 und der Führungsschiene 10
28, 29, 30 Festanschlüsse
31 Platte
32 Teil des Anschlusses 30 als Klammer
33 Führungsteil der Klammer 32
34 Befestigungsöffnungen
35 Fokussierblock des Fotoapparates
36 Grundplatte des Blocks 35
37 Halter für die Linsengruppe 38
38 Linsengruppe 38
39 Optische Achse der Linsengruppe 38
40 Stütze für den Oszillator 2
41 Deckel
42 Fixierfeder

## Patentansprüche

1. Ultraschalllinearmotor (1), mit einem plattenförmigen Ultraschalloszillator (2) mit zwei ebenen, parallelen Hauptflächen, zwei Stirnflächen und zwei Seitenflächen, und einem sich mit mindestens einer Führungsschien (10) im Eingriff befindenden und zwei Friktionsteile (11, 12) aufweisenden beweglichen Element (9) welches eine Friktionswirkung mit dem Ultraschalloszillator (2) über die Seitenflächen der Friktionsteile (11, 12) eingeht,
**dadurch gekennzeichnet, dass**
die Seitenflächen (4, 8) des Ultraschalloszillators eben ausgeführt sind und unter gleichen Winkeln zu einer Längssymmetrieebene (19) so geneigt sind, dass die Schnittlinien der Ebenen der Seitenflächen (7, 8) mit der Längssymmetrieebene parallel zu den Hauptflächen des Ultraschalloszillators angeordnet sind, und dass die Friktionsteile (11, 12) des beweglichen Elementes (9) untereinander federnd verbunden sind, wobei die Friktionsteile (11, 12) des beweglichen Elementes (9) sich mit einer ersten Anpresskraft an die entsprechenden Seitenflächen (7, 8) des Ultraschalloszillators (2) und das bewegliche Element (9) mit einer zweiten Anpresskraft an die Führungsschiene (10) anpressen, wobei das Verhältnis zwischen erster und zweiter Anpresskraft durch den Neigungs winkel der Seitenflächen (7, 8) zur Längssymmetrieebene (19) des Ultraschalloszillators (2) bestimmt wird.

2. Ultraschalllinearmotor nach Anspruch 1,
**dadurch gekennzeichnet, dass**
Anschlusselektroden des Ultraschalloszillators elastische dünne leitfähige Stäbe aufweisen, deren eines Ende fest mit den entsprechenden Elektroden verbunden ist und deren anderes Ende, bezogen auf die Führungsschiene, fest fixiert ist.

3. Ultraschalllinearmotor nach Anspruch 2,
**dadurch gekennzeichnet, dass**
die Führungsschiene klammerartig ausgeführt und fest mit einer gemeinsamen Elektrode des Ultraschalloszillators verbunden ist.

4. Ultraschalllinearmotor nach einem der vorangehenden Ansprüche, **dadurch gekennzeichnet, dass**
die Friktionsteile des beweglichen Elementes durch ein Druckfederelement miteinander verbunden und elastisch gegeneinander vorgespannt sind.

5. Ultraschalllinearmotor nach Anspruch 4,
**dadurch gekennzeichnet, dass**
das Druckfederelement klammerartig ausgeführt ist, wobei die Friktionsteile an den freien Enden der Schenkel der Klammer platziert sind.

6. Ultraschalllinearmotor nach einem der vorangehenden Ansprüche,
**dadurch gekennzeichnet, dass**
die Hauptflächen und/oder die Seitenflächen des Ultraschalloszillators rechteckig ausgeführt sind.

## Claims

1. An ultrasonic linear motor (1), comprising a plate-type ultrasonic oscillator (2) with two planar parallel main faces, two end faces and two lateral faces, and a mobile element (9) engaged with at least one guide rail (10) and having two friction parts (11, 12), said element frictionally interacting with the ultrasonic oscillator (2) via the lateral faces of the friction parts (11, 12),
**characterized in that**
the lateral faces (7, 8) of the ultrasonic oscillator are planar and are inclined at like angles in relation to a longitudinal plane of symmetry (19) in such a way that the intersection lines between the planes of the lateral faces (7, 8) and the longitudinal plane of symmetry extend parallel to the main faces of the ultrasonic oscillator, and that the friction parts (11, 12) of the mobile element (9) are resiliently connected to each other, wherein the friction parts (11, 12) of the mobile element (9) press against the corresponding lateral faces (7, 8) of the ultrasonic oscillator (2) with a first contact pressing force and the mobile element (9) presses against the guide rail (10) with a second contact pressing force, wherein the ratio between the first and second contact pressing forces is determined by the angle of inclination of the lateral faces (7, 8) in relation to the longitudinal plane of symmetry (19) of the ultrasonic oscillator (2).

2. The ultrasonic linear motor according to claim 1,
**characterized in that**
connection electrodes of the ultrasonic oscillator comprise elastic, thin, conductive rods, the one end of which is firmly connected to the corresponding electrodes and the other end of which is firmly fixed in relation to the guide rail.

3. The ultrasonic linear motor according to claim 2,
**characterized in that**
the guide rail is realized in a clamp-type manner and is firmly connected to a common electrode of the ultrasonic oscillator.

4. The ultrasonic linear motor according to one of the preceding claims,
**characterized in that**
the friction parts of the mobile element are connected to each other by a compression spring element and are elastically biased against each other.

5. The ultrasonic linear motor according to claim 4,
**characterized in that**
the compression spring element is realized in a clamp-type manner, with the friction parts being placed at the free ends of the legs of the clamp.

6. The ultrasonic linear motor according to one of the preceding claims,
**characterized in that**
the main faces and/or the lateral faces of the ultrasonic oscillator are rectangular.

## Revendications

1. Moteur linéaire à ultrasons (1), comprenant un oscillateur à ultrasons (2) en forme de plaque présentant deux surfaces principales planes parallèles, deux surfaces frontales et deux surfaces latérales, et un élément mobile (19), qui se trouve en engagement avec au moins un rail de guidage (10) et qui comporte deux pièces de friction (11, 12), cet élément établissant un effet de friction avec l'oscillateur à ultrasons (2) via les surfaces latérales de l'élément de friction (11, 12),
**caractérisé en ce que**
les surfaces latérales (7, 8) de l'oscillateur à ultrasons sont réalisées planes et sont placées sous le même angle par rapport à un plan de symétrie longitudinal (19), de telle sorte que les lignes de coupe des plans des surfaces latérales (7, 8) avec le plan de symétrie longitudinal sont agencées parallèlement aux surfaces principales de l'oscillateur à ultrasons, et **en ce que** les pièces de friction (11, 12) de l'élément mobile (9) sont reliées l'une à l'autre avec effet élastique, et les pièces de friction (11, 12) de l'élément mobile (9) sont pressées avec une première force de pressage contre les surfaces latérales correspondantes (7, 8) de l'oscillateur à ultrasons (2) et l'élément mobile (9) est pressé avec une seconde force de pressage contre le rail de guidage (10), et le rapport entre la première force de pressage et la seconde force de pressage est déterminé par l'angle d'inclinaison des surfaces latérales (7, 8) par rapport au plan de symétrie longitudinal (19) de l'oscillateur à ultrasons (2).

2. Moteur linéaire à ultrasons selon la revendication 1,
**caractérisé en ce que** les électrodes de raccordement de l'oscillateur à ultrasons présentent des tiges conductrices élastiques minces, dont une extrémité est reliée solidairement avec les électrodes correspondantes, et dont l'autre extrémité, par référence au rail de guidage, est fixée de façon solidaire.

3. Moteur linéaire à ultrasons selon la revendication 2,
**caractérisé en ce que** le rail de guidage est réalisé à la manière d'une pince et est relié fermement à une électrode commune de l'oscillateur à ultrasons.

4. Moteur linéaire à ultrasons selon l'une des revendications précédentes,
**caractérisé en ce que** les pièces de friction de l'élément mobile sont reliées l'une à l'autre par un élément de ressort à compression, et sont précontraintes élastiquement l'une contre l'autre.

5. Moteur linéaire à ultrasons selon la revendication 4,
**caractérisé en ce que** l'élément de ressort à compression est réalisé en forme de pince, et les pièces de friction sont placées aux extrémités libres des bras de la pince.

6. Moteur linéaire à ultrasons selon l'une des revendications précédentes,
**caractérisé en ce que** les surfaces principales et/ou les surfaces latérales de l'oscillateur à ultrasons sont réalisées sous forme rectangulaire.
